# EUROPÄISCHE PATENTSCHRIFT

(11) **EP 2 218 970 B1**
(45) Veröffentlichungstag und Bekanntmachung des Hinweises auf die Patenterteilung: **23.04.2014**
(21) Anmeldenummer: 09002222.9
(22) Anmeldetag: 17.02.2009
(51) Int. Cl.: F24D 3/14

(54) **Temperierungssystem**
Tempering system
Système d'équilibrage des températures

(43) Veröffentlichungstag der Anmeldung: 18.08.2010
(73) Patentinhaber: Santore, Karl, 25335 Neuendorf (DE); Ahlf, Günter, 25348 Glückstadt (DE)
(72) Erfinder: Santore, Karl, 25335 Neuendorf (DE); Ahlf, Günter, 25348 Glückstadt (DE)
(74) Vertreter: Glawe, Delfs, Moll

(56) Entgegenhaltungen:
- EP-A2- 0 931 986
- WO-A1-2008/091070
- CA-A1- 2 567 669
- DE-A1- 2 109 049
- DE-A1- 10 043 288
- DE-U- 6 903 113
- DE-U- 7 225 312

## Beschreibung

Die vorliegende Erfindung betrifft ein Temperierungssystem für Gebäude mit in Wänden verlaufenden röhrenförmigen Kanälen, in die von einer temperierten Flüssigkeit durchströmte Temperierrohre eingesetzt sind, die mit einem Zulauf und einem Ablauf verbunden sind. Die Temperierrohre weisen ein Außenrohr auf, das an seinem einen Ende geschlossen ist und an seinem anderen Ende mit dem Zulauf oder Ablauf verbunden ist. Die Temperierrohre weisen außerdem ein im Außenrohr koaxial angeordnetes Innenrohr auf, das in der Nähe des einen Endes des Außenrohrs mit dem Ablauf oder Zulauf verbunden ist und sich bis zum anderen Ende des Außenrohrs erstreckt, wo es mit einer Öffnung versehen ist.

Bei einem solchen Temperierungssystem (DE 10 2006 047 559 A1) sind keine Heizkörper mehr erforderlich. Es werden vielmehr die Wände beheizt. Es ist mit dem vorbekannten System auch möglich, die Wände zu kühlen. Dies hat verschiedene Vorteile. Bekannt ist ein Temperierungssystem gemäß dem Obergriff auch aus der DE 2 109 049 A1, wobei das Temperierungssystem dort zur Bodenbeeinflussung verwendet wird. Ein ähnliches Temperierungssystem ist auch aus der WO 2008/091070 A1 bekannt.

Ähnlich wie bei einer Fußbodenheizung sind keine Platz einnehmenden und ästhetisch wenig ansprechenden Heizkörper erforderlich. Die Vorlauftemperatur kann wesentlich niedriger sein als bei Heizkörpern, was es ermöglicht, das System mit Solarwärme, Erdwärme oder anderen Wärmequellen mit niedriger Temperatur zu betreiben. Die in das Heizsystem eingetragene Energie wird besonders effizient genutzt, da das Speichervermögen der Wände ausgenutzt wird. Gegenüber der Fußbodenheizung besteht dabei der Vorteil, dass mit den Wänden normalerweise wesentlich mehr Fläche für die Heizung zur Verfügung steht, als dies bei einer Fußbodenheizung der Fall ist. Gleichzeitig wird durch die Erwärmung der Außenwände der Transmissionsverlust des Gebäudes über die Außenwände reduziert. Auch bei der Kühlung bestehend Vorteile, indem Wände gleichmäßig gekühlt werden und der Luftzug einer Klimaanlage sowie starke übermäßige Kühlung vermieden werden.

Bei dem bekannten System werden Rohre in die Kanäle des Mauerwerks eingefügt und oben und unten mit Zulauf und Ablauf für das erwärmte Wasser versehen. Dies erfordert einerseits sehr großen Montageaufwand auf der Baustelle. Andererseits besteht wegen der großen Zahl von Verbindungen, die hergestellt werden müssen, die Gefahr, dass bei der Montage entstandene Undichtigkeiten übersehen werden. Weiterhin besteht nach der Teilmontage des Systems (Einzug der Rohre in die Wände und Einbetonieren der Vorlaufleitungen in die Decke) die Gefahr der Beschädigung der während der überwiegenden Bauzeit noch nicht durch Beton beziehungsweise Estrich geschützten Systemkomponenten (Rohre und Verbindungen).

Die Aufgabe der Erfindung besteht in der Schaffung eines Systems der eingangs genannten Art, das an der Baustelle schneller, einfacher und zuverlässiger eingerichtet werden kann.

Die erfindungsgemäße Lösung besteht darin, dass zwischen röhrenförmigen Kanälen, in die Temperierrohre eingesetzt sind, weitere röhrenförmige Kanäle zur Luftzu- und Abführung ausgebildet und mit in das Innere von Räumen des Gebäudes gerichteten Öffnungen versehen sind.

Die Temperierrohre können insbesondere von oben in die Kanäle eingesetzt werden und müssen nur oben mit Zulauf und Ablauf verbunden werden. Im unteren Bereich der Wand sind keine Anschlüsse erforderlich, was schon den Bau der Wände bzw. des Gebäudes erleichtert. Durch das Außenrohr strömt dann die erwärmte oder gekühlte Temperierflüssigkeit nach unten und kehrt durch das Innenrohr zurück und wird dann wiederum oben abgeführt. Eine umgekehrte Durchströmung ist zwar denkbar, aber weniger vorteilhaft. Dabei findet ein Wärmeaustausch mit dem Mauerwerk statt, das erwärmt beziehungsweise gekühlt wird. Der Wärmekontakt kann dadurch verbessert werden, dass bei Kanälen, die vorgeformt sind (zum Beispiel in Kalksandstein) nach dem Einfügen der Temperierrohre der verbleibende Raum zwischen Temperierrohr und Wand der Kanäle mit z.B. Quarzsand aufgefüllt wird. In anderen Fällen wird man bei Verwendung von Betonwänden die Temperierrohre eingießen, sodass der gute Wärmekontakt von vornherein gesichert ist.

Eine besonders einfache und zweckmäßige Bauform der Temperierrohre zeichnet sich dadurch aus, dass mehrere parallel angeordnete Temperierrohre modulartig durch an dem einen Ende angeordnete Zulauf- und Ablaufleitungen verbunden sind. Dadurch wird die Zahl der Verbindungen und Rohrleitungen für den Vorlauf und Rücklauf, die an der Baustelle hergestellt bzw. installiert werden müssen, sehr stark verringert. Die Anordnungen von parallelen Temperierrohren, deren Abstand dem Abstand der Kanäle entspricht können einfach in die Kanäle eingesetzt werden. Ein weiterer Vorteil der modularen Bauweise besteht darin, dass einzelne Module getrennt aktiviert werden können, was zu einer besseren Steuerung des Systems führt und den Energiebedarf des Gebäudes senkt. So könnte man zum Beispiel eine Wand, die Sonnenstrahlung ausgesetzt ist, kühlen, während andere Wände gar nicht temperiert oder im Extremfall sogar erwärmt werden.

Erfindungsgemäß werden nicht in alle Kanäle, die in den Wänden vorhanden sind, die erfindungsgemäßen Temperierrohre eingesetzt. Dazwischen liegende Kanäle, insbesondere jeder zweite dazwischen liegende Kanal, wird für die Be- und Entlüftung verwendet, indem diese Kanäle mit Zuluftleitungen und Abluftleitungen versehen sind, wobei dann die Wände Bohrungen aufweisen, durch die die zugeführte Luft aus den Kanälen in den Raum einströmen bzw. durch die Kanäle aus diesem Raum herausströmen kann. Zweckmäßigerweise wird man dabei die Zuluft und die Abluft auf verschiedenen Seiten der Räume vorsehen, sodass diese von der Luft durchströmt werden. Wegen der großen Anzahl von Kanälen und Öffnungen tritt dabei die Luft aus sehr vielen Öffnungen aus bzw. tritt in sehr viele Öffnungen ein, sodass eine wirkungsvolle Lüftung trotz niedriger Strömungsgeschwindigkeiten erreicht werden kann. Für die Luftförderung sind dabei entsprechende Ventilatoren oder Gebläse, nämlich Druckgebläse und/oder Sauggebläse vorzusehen.

Zweckmäßigerweise sind die in den Wänden verlaufenden röhrenförmigen Kanäle vertikal ausgerichtet. Dies hat gegenüber einer horizontalen Ausrichtung den Vorteil, dass die Temperierrohre leichter und ohne große Reibung eingeführt werden können. Die Anschlüsse befinden sich dann im oberen Ende der Wand, wo sie innerhalb der Geschossdecken mit den entsprechenden Leitungen versehen werden können.

Zweckmäßigerweise verlaufen die Kanäle in Außenwänden im inneren Drittel dieser Wände, sodass nach innen eine gute Erwärmung bzw. Kühlung stattfindet, während man nach außen die isolierende Wirkung des größeren Teils der Wanddicke hat.

Zweckmäßigerweise wird, wenn geheizt wird, die Abluft zur Wärmerückgewinnung über einen Wärmetauscher geleitet, der durch die Zuluft und Abluft im Gegenstrom durchströmt wird. Bei einer vorteilhaften Ausführungsform weist dieser parallel zu einander angeordnete, insbesondere schlangenförmig angeordnete Röhren für die Zuluft und Abluft auf, die in einem länglichen Betonelement eingegossen oder in ein längliches Kalksandsteinelement oder Mauerwerkelement eingebaut sind. Man hat so, ohne dass viele Verzweigungen nötig sind, trotz verhältnismäßig großer Rohrquerschnitte eine gute Wärmetauscherwirkung.

Der Wärmetauscher aus Beton, Kalksandstein oder Mauerwerk erstreckt sich dabei zweckmäßigerweise zumindest über eine Geschosshöhe, zweckmäßigerweise sogar über mehrere Geschosshöhen, um die Effizienz des Wärmetauschers entsprechend groß zu machen.

Die für die Heizung erforderliche Wärme kann insbesondere durch ein in die Erde eingeführtes Wärmerohr zur Ausnutzung der Erdwärme mit Hilfe einer Wärmepumpe gewonnen werden. In einem solchen Wärmerohr verdampft im unteren, durch die Erdwärme wärmeren Teil eine Flüssigkeit, die sich am oberen Ende, wo durch die Wärmepumpe Wärme entzogen wird, wieder kondensiert und dann an den Wänden nach unten läuft, um erneut verdampft zu werden (DE 39 06 135 A1).

Solche Wärmerohre werden üblicherweise aus Metall gefertigt. Erfindungsgemäß wurde nun herausgefunden, dass Wärmerohre besonders zweckmäßig sind, die aus Kunststoff, insbesondere Polyethylen oder Propylen bestehen. Dieses Material kann vorteilhafterweise auch für die Temperierrohre, Zulauf- und Ablaufleitungen und/oder den Wärmetauscher verwendet werden. Erstaunlicherweise haben sich dabei Kunststoffe, insbesondere das Polyethylen oder Propylen als ausreichend dampfdiffusionsdicht erwiesen, so dass auf die wesentlich aufwendigere Konstruktion mit Metallrohren verzichtet werden kann. Insbesondere sind die Rohre aus einem Kunststoff hergestellt, der bis 40° C dampfdiffusionsdicht ist. Eine so hohe Temperatur wird dabei in dem erfindungsgemäßen Temperierungssystem nicht erreicht, da wegen der großflächigen Heizung die Vorlauftemperatur nicht wesentlich höher als 20 °C sein muss. Als Arbeitsflüssigkeit bzw. -gas hat sich im Zusammenhang mit Wärmerohren aus Kunststoff wegen des niedrigen Arbeitsdrucks R404A als vorteilhaft erwiesen.

Bei einer anderen vorteilhaften Ausführungsform oder zusätzlich kann das Temperierungssystem Solarkollektoren zur Wärmegewinnung und Einrichtungen aufweisen, mit denen die Wärmeenergie mehrstufig fast vollständig ausgenutzt wird.

Dies geschieht zunächst durch Brauchwassererwärmung im Temperaturbereich oberhalb 60° C, anschließend zur Gebäudeerwärmung im Bereich von 20° C bis 60° C. Die entsprechend abgekühlte Flüssigkeit kann dann zur Reduzierung des Transmissionswärmeverlusts gegen das Erdreich in die Gebäudesohle eingespeist werden, und zwar mit einem Temperaturbereich zwischen 15° C und 20° C. Schließlich wird die Restwärme zur Leistungsoptimierung der Geothermieanlage genutzt, wobei die gesamte für die Wärmepumpe verwendete Energie geringer wird und/oder die erforderliche Erdsondenlänge reduziert werden kann.

Das Wärmerohr dient in erster Linie zur Gewinnung von Erdwärme. Es ist erfindungsgemäß auch möglich, Wärmerohre waagerecht zu verlegen, um Wärme zum Beispiel vom zentralen Bereich eines Gebäudes zum mehr nach außen liegenden Teil zu transportieren. Bei solchen Wärmerohren, die waagerecht angeordnet sind, kann das verflüssigte Gas natürlich nicht durch Schwerkraftwirkung zurückgefördert werden. Dies geschieht vielmehr durch in das Wärmerohr eingesetzte Fliegengitter, Kupferdrahtgeflechte oder dergleichen, die eine Art Dochtwirkung ausüben, um die Flüssigkeit zum wärmeren Ende des Wärmerohrs zu leiten.

Um das Gebäude oder einzelne Wände kühlen zu können, verlegt man zweckmäßigerweise eine längere Flüssigkeitsleitung insbesondere in Form eines Schlauchs unter der Sohle des Gebäudes, genauer gesagt unter der ca. 50 cm für die Gründung erforderlichen Sandschicht. Leitet man hier die temperierflüssigkeit durch, so wird sie gekühlt und kann dann in die Temperierrohre geleitet werden.

Durch die Erfindung wird also wie erwähnt ein Temperierungssystem geschaffen, mit dem auf sehr zweckmäßige und energiesparende Weise Gebäude beheizt und/oder gekühlt werden können. Die Be- und Entlüftung kann dabei durch weitere in den Wänden verlaufende Kanäle erfolgen, was ebenfalls Platz sparend ist, aber auch kaum Geräusche verursacht. Die Gefahr von Schimmelpilzbildung wegen Feuchtigkeit der umgewälzten Luft besteht dabei nicht, da im Sommer die Wände ohnehin warm sind, im Winter aber durch die erfindungsgemäßen Temperierrohre beheizt werden. Insbesondere, wenn die Rohre usw. aus Kunststoff bestehen, besteht auch keine Korrosionsgefahr, wobei selbstverständlich diese Korrosionsgefahr für die Wände ebenfalls nicht besteht. Das System ist auch bis auf Ventilatoren und Filter aufgrund der verwendeten Baustoffe wartungsfrei. Das System ist auch kostengünstig und Zeit sparend herzustellen, da sämtliche Zu- und Abluftkanäle bzw. die Kanäle für die Temperierrohre bereits mit der Erstellung der Wände ohne zusätzlichen zeitlichen Aufwand und ohne zusätzliche Kosten hergestellt werden können.

Die Erfindung wird im folgenden anhand eine vorteilhaften Ausführungsform unter Bezugnahme auf die beigefügten Zeichnungen beispielsweise beschrieben. Es zeigen:
- Figur 1: ein Temperierrohrmodul;
- Figur 2: eine Detailansicht des Temperierrohrmoduls von Figur 1, teilweise weggeschnitten;
- Figur 3: einen erfindungsgemäßen Wärmetauscher im Längs- schnitt;
- Figur 4: den Wärmetauscher der Figur 3 im Querschnitt; und
- Figur 5: ein Diagramm zur Verdeutlichung der Ausnutzung der Solarwärme.

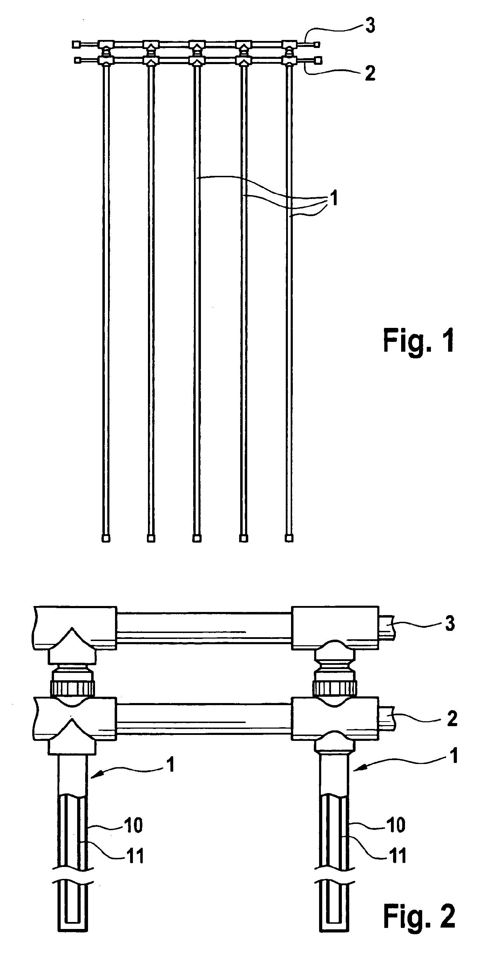

Wie dies in Figur 1 und 2 gezeigt ist, besteht das Temperierrohrmodul aus Temperierrohren 1, die unten geschlossen, parallel angeordnet und am oberen Ende durch eine Zulaufleitung 2 verbunden sind. In den Außenrohren 10 befindet sich dabei ein bis zum Boden der Außenrohre 10 reichendes, in Figur 2 gezeigtes Innenrohr 11, das koaxial mit dem Außenrohr 10 ausgerichtet ist und dessen obere Öffnung mit einer Ablaufleitung 3 verbunden ist. Die erwärmte oder gekühlte Temperierflüssigkeit strömt also durch die Zulaufleitungen 2 in die Außenrohre 10 der Temperierrohre 1 ein, strömt bis zum unteren Ende und wird von dort durch das koaxiale Innenrohr 11 wieder nach oben zur Ablaufleitung 3 zurückgeführt. Das Außenrohr 10 wird dadurch erwärmt bzw. gekühlt und kann diese Wärme an die Wand abgeben bzw. die Wand kühlen.

Figur 2 zeigt eine Detaildarstellung, die die Verbindung der Temperierrohre 1 mit der Zulaufleitung 2 (Vorlauf) der Ablaufleitung (Rücklauf) 3 sowie das Innenrohr 11 zeigt.

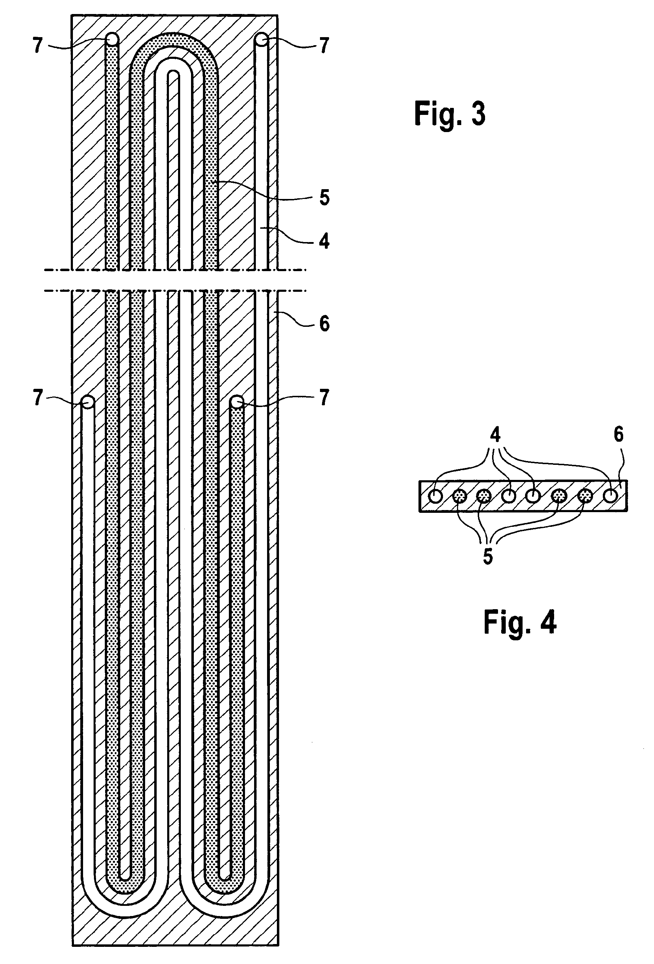

Figur 3 zeigt im Querschnitt einen Wärmetauscher, der parallele schlangenförmig angeordnete Röhren 4 und 5 aufweist. Diese Röhren 4 und 5 sind in einen länglichen Betonblock 6 eingegossen, der sich nach Fertigstellung des Temperierungssystems bzw. des Gebäudes über zumindest ein Stockwerk, vorteilhafter Weise sogar über mehrere Stockwerke erstreckt. Die warme Abluft und die kalte Zuluft werden dabei durch Öffnungen 7 in die Röhren 4 und 5 eingeleitet bzw. aus diesen heraus geleitet. Dieser Wärmetauscher könnte auch benutzt werden, wenn bei sehr hohen Außentemperaturen das Gebäude gekühlt wird.

Figur 4 zeigt einen Querschnitt durch den Wärmetauscher der Figur 3, wo noch einmal deutlich die nebeneinander liegenden Röhren 4 und 5 gezeigt sind.

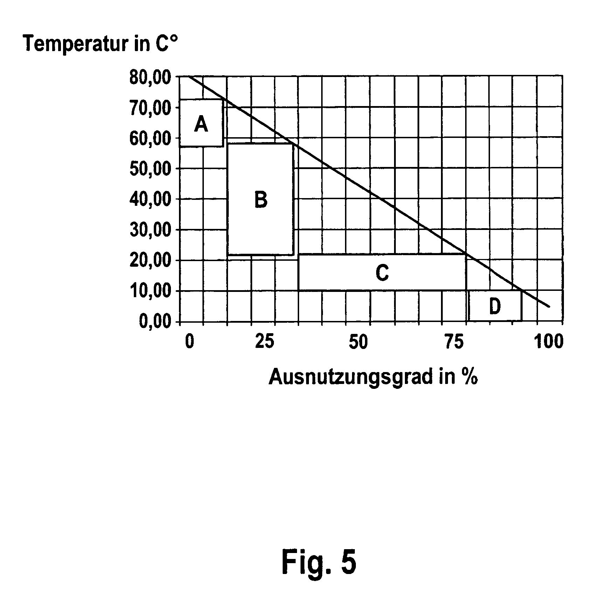

Figur 5 zeigt, wie bei Verwendung von Solarkollektoren die Wärme sehr effizient ausgenutzt werden kann.

Die durch die Solarkollektoren erwärmte Flüssigkeit wird zunächst im Temperaturbereich A für Brauchwassererwärmung verwendet. Der Bereich B dient zur Erwärmung des Gebäudes. Der Bereich C schließlich dient zur Reduzierung der Transmissionswärmeverluste gegen das Erdreich; hier wird das in der Solaranlage zirkulierende Wasser oder die sonstige Flüssigkeit durch die Sohle des Gebäudes geleitet. Der Bereich D schließlich dient zur Leistungsoptimierung der Erdwärmeausnutzung, indem restliche Wärme an den Boden abgegeben wird. Die in der Figur gezeigten Temperaturbereiche sind dabei nur Beispiele.

## Patentansprüche

1. Temperierungssystem für ein Gebäude, umfassend in Wänden des Gebäudes verlaufende röhrenförmige Kanäle, in die von einer temperierten Flüssigkeit durchströmte Temperierrohre (1) eingesetzt sind, die mit einem Zulauf (2) und einem Ablauf (3) verbunden sind, wobei die Temperierrohre (1) ein Außenrohr (10), das an seinem einen Ende geschlossen ist und an seinem anderen Ende mit dem Zulauf (2) oder Ablauf (3) verbunden ist, und ein darin koaxial angeordnetes Innenrohr (11) aufweisen, das in der Nähe des einen Endes des Außenrohrs mit dem Ablauf (3) oder Zulauf (2) verbunden ist und sich bis zum anderen Ende des Außenrohrs erstreckt, wo es mit einer Öffnung versehen ist, **dadurch gekennzeichnet, dass** zwischen röhrenförmigen Kanälen, in die Temperierrohre (1) eingesetzt sind, weitere röhrenförmige Kanäle (4, 5) zur Luftzu- und Abführung ausgebildet und mit in das Innere von Räumen des Gebäudes gerichteten Öffnungen versehen sind.

2. Temperierungssystem nach Anspruch 1, **dadurch gekennzeichnet, dass** mehrere parallel angeordnete Temperierrohre (1) modulartig durch an dem einen Ende angeordnete Zulauf- und Ablaufleitungen (2, 3) verbunden sind.

3. Temperierungssystem nach einem der Ansprüche 1 oder 2, **dadurch gekennzeichnet, dass** es mindestens einen Wärmetauscher (4-7) aufweist, der durch die Zuluft und Abluft im Gegenstrom durchströmt wird und parallel zueinander angeordnete, insbesondere schlangenförmig angeordnete Röhren (4, 5) für die Zuluft und Abluft aufweist, die in einem länglichen Betonelement (6) eingegossen sind.

4. Temperierungssystem nach einem der Ansprüche 1 bis 3, **dadurch gekennzeichnet, dass** es ein in die Erde eingeführtes Wärmerohr zur Ausnutzung der Erdwärme und eine Wärmepumpe aufweist.

5. Temperierungssystem nach einem der Ansprüche 3 und 4, **dadurch gekennzeichnet, dass** die Temperierrohre (1), Zulauf- und Ablaufleitungen (2, 3), der Wärmetauscher (4-7) und/oder das Wärmerohr aus Kunststoff, insbesondere Polyethylen oder Propylen bestehen.

6. Temperierungssystem nach einem der Ansprüche 3 und 4, **dadurch gekennzeichnet, dass** die Temperierrohre (1), Zulauf- und Ablaufleitungen (2, 3), der Wärmetauscher (4-7) und/oder das Wärmerohr schweißbar und bis 40°C dampfdiffusionsdicht sind.

7. Temperierungssystem nach einem der Ansprüche 1 bis 6, **dadurch gekennzeichnet, dass** es waagerecht angeordnete Wärmerohre aufweist, in denen ein Fliegengitter, Kupferdrahtgeflecht oder dergleichen angeordnet ist.

8. Verwendung des Temperierungssystems nach einem der Ansprüche 1 bis 7 in einem Gebäude, wobei die Wände aus Kalksandstein bestehen und nach dem Einführen der Temperierrohre (1) verbleibende Zwischenräume in den röhrenförmigen Kanälen mit Quarzsand oder ähnlichen Materialien verfüllt sind.

9. Verwendung des Temperierungssystems nach einem der Ansprüche 1 bis 7 in einem Gebäude, wobei die Wände aus Beton bestehen und die Temperierrohre (1) in den Beton eingegossen sind.

10. Verwendung des Temperierungssystems nach einem der Ansprüche 1 bis 7 in einem Gebäude oder nach einem der Ansprüche 8 bis 9, wobei die in Wänden verlaufenden röhrenförmigen Kanäle vertikal ausgerichtet sind.

11. Verwendung des Temperierungssystems nach einem der Ansprüche 1 bis 7 in einem Gebäude oder nach einem der Ansprüche 8 bis 10, wobei die Kanäle in Außenwänden im inneren Drittel dieser Wände angeordnet sind.

12. Verwendung des Temperierungssystem nach einem der Ansprüche 1 bis 7 in einem Gebäude oder nach einem der Ansprüche 8 bis 11, wobei das Temperierungssystem Solarkollektoren zur Wärmegewinnung und Einrichtungen aufweist, mit denen die Wärmeenergie zuerst zur Brauchwassererwärmung, dann zur Erwärmung des Gebäudes, dann zur Reduzierung der Transmissionsverluste gegen das Erdreich und schließlich zur Leistungsoptimierung der Gewinnung von Erdwärme verwendet wird.

## Claims

1. Temperature control system for a building, comprising tubular ducts which extend in walls of the building and into which temperature control tubes (1), through which a temperature-controlled liquid flows, are inserted, which temperature control tubes are connected to an inlet (2) and an outlet (3), wherein the temperature control tubes (1) have an outer tube (10) which is closed at one of its ends and is connected at its other end to the inlet (2) or outlet (3), and an inner tube (11) which is arranged coaxially in the outer tube, which inner tube is connected to the outlet (3) or inlet (2) in the vicinity of one end of the outer tube and extends up to the other end of the outer tube, where it is provided with an opening, **characterized in that** further tubular ducts (4, 5) for air supply and discharge are formed between tubular ducts into which temperature control tubes (1) are inserted, and are provided with openings directed into the interior of rooms of the building.

2. Temperature control system according to Claim 1, **characterized in that** a plurality of temperature control tubes (1) arranged in parallel are connected in a modular manner by inlet and outlet lines (2, 3) arranged at one end.

3. Temperature control system according to either of Claims 1 and 2, **characterized in that** it has at least one heat exchanger (4-7) through which the supply air and exhaust air flow in countercurrent and has tubes (4, 5) for the supply air and exhaust air which are arranged parallel to one another, in particular being arranged in a serpentine manner, which tubes are cast in an elongate concrete element (6).

4. Temperature control system according to one of Claims 1 to 3, **characterized in that** it has a heat tube introduced into the earth for utilizing the earth's heat, and a heat pump.

5. Temperature control system according to either of Claims 3 and 4, **characterized in that** the temperature control tubes (1), inlet and outlet lines (2, 3), the heat exchanger (4-7) and/or the heat tube consist of plastic, in particular polyethylene or propylene.

6. Temperature control system according to either of Claims 3 and 4, **characterized in that** the temperature control tubes (1), inlet and outlet lines (2, 3), the heat exchanger (4-7) and/or the heat tube are weldable and vapour-diffusion-tight up to 40°C.

7. Temperature control system according to one of Claims 1 to 6, **characterized in that** it has horizontally arranged heat tubes in which a fly screen, copper wire mesh or the like is arranged.

8. Use of the temperature control system according to one of Claims 1 to 7 in a building, wherein the walls consist of lime-sand brick and, after introducing the temperature control tubes (1), remaining interspaces in the tubular ducts are filled with quartz sand or similar materials.

9. Use of the temperature control system according to one of Claims 1 to 7 in a building, wherein the walls consist of concrete and the temperature control tubes (1) are cast into the concrete.

10. Use of the temperature control system according to one of Claims 1 to 7 in a building or according to either of Claims 8 and 9, wherein the tubular ducts extending in walls are oriented vertically.

11. Use of the temperature control system according to one of Claims 1 to 7 in a building or according to one of Claims 8 to 10, wherein the ducts are arranged in outer walls in the inner third of these walls.

12. Use of the temperature control system according to one of Claims 1 to 7 in a building or according to one of Claims 8 to 11, wherein the temperature control system has solar collectors for heat recovery and devices by means of which the heat energy is used first of all for service water heating, then for heating the building, then for reducing the transmission losses with respect to the ground and finally for optimizing the performance in recovering the earth's heat.

## Revendications

1. Système de régulation thermique pour un bâtiment, comportant des canaux tubulaires, qui s'étendent dans les murs du bâtiment et dans lesquels sont incorporés des tubes de régulation thermique (1) qui sont traversés par un liquide régulateur thermique et qui sont reliés à une entrée (2) et à une sortie (3), lesdits tubes de régulation thermique (1) comportant un tube extérieur (10), fermé à l'une de ses extrémités et relié à l'entrée (2) ou à la sortie (3) au niveau de son autre extrémité, et un tube intérieur (11) qui est disposé coaxialement à l'intérieur dudit tube extérieur et qui est relié à la sortie (3) ou à l'entrée (2) à proximité de l'une des extrémités du tube extérieur et s'étend jusqu'à l'autre extrémité du tube extérieur, où il est muni d'une ouverture, **caractérisé en ce qu'**entre les canaux tubulaires, dans lesquels sont incorporés des tubes de régulation thermique (1), sont réalisés d'autres canaux tubulaires (4, 5), qui sont destinés à l'admission et à l'évacuation de l'air et qui sont munis d'orifices dirigés vers l'intérieur des pièces du bâtiment.

2. Système de régulation thermique selon la revendication 1, **caractérisé en ce que** plusieurs tubes de régulation thermique (1) parallèles entre eux sont reliés à la manière d'un module par des conduites d'admission et d'évacuation (2, 3) disposées au niveau de l'une des extrémités.

3. Système de régulation thermique selon la revendication 1 ou 2, **caractérisé en ce que** ledit système comporte au moins un échangeur thermique (4-7), qui est traversé à contre-courant par l'air frais et l'air vicié et qui comporte des tubes (4, 5) pour l'air frais et l'air vicié, qui sont disposés parallèlement entre eux, en particulier en forme de serpentins, et qui sont coulés dans un élément en béton (6) allongé.

4. Système de régulation thermique selon l'une quelconque des revendications 1 à 3, **caractérisé en ce que** ledit système comporte un caloduc, guidé dans le sol pour l'exploitation de la chaleur du sol, et une pompe à chaleur.

5. Système de régulation thermique selon l'une quelconque des revendications 3 et 4, **caractérisé en ce que** les tubes de régulation thermique (1), les conduites d'admission et d'évacuation (2, 3), l'échangeur thermique (4-7) et/ou le caloduc sont réalisés en matière plastique, en particulier en polyéthylène ou en propylène.

6. Système de régulation thermique selon l'une quelconque des revendications 3 et 4, **caractérisé en ce que** les tubes de régulation thermique (1), les conduites d'admission et d'évacuation (2, 3), l'échangeur thermique (4-7) et/ou le caloduc sont soudables et sont étanches à la diffusion de la vapeur jusqu'à 40°C.

7. Système de régulation thermique selon l'une quelconque des revendications 1 à 6, **caractérisé en ce que** ledit système comporte des caloducs disposés horizontalement, dans lesquels sont disposés une moustiquaire, un treillis en fil de cuivre ou tout élément similaire.

8. Utilisation du système de régulation thermique selon l'une quelconque des revendications 1 à 7 dans un bâtiment, les murs étant réalisés en grès calcaire et les interstices subsistant dans les canaux tubulaires après l'introduction des tubes de régulation thermique (1) étant comblés par du sable quartzeux ou des matériaux similaires.

9. Utilisation du système de régulation thermique selon l'une quelconque des revendications 1 à 7 dans un bâtiment, les murs étant réalisés en béton et les tubes de régulation thermique étant coulés dans le béton.

10. Utilisation du système de régulation thermique selon l'une quelconque des revendications 1 à 7 dans un bâtiment ou selon l'une quelconque des revendications 8 à 9, les canaux tubulaires, qui s'étendant dans les murs, étant orientés verticalement.

11. Utilisation du système de régulation thermique selon l'une quelconque des revendications 1 à 7 dans un bâtiment ou selon l'une quelconque des revendications 8 à 10, les canaux étant disposés dans des murs extérieurs dans le tiers intérieur de ces murs.

12. Utilisation du système de régulation thermique selon l'une quelconque des revendications 1 à 7 dans un bâtiment ou selon l'une quelconque des revendications 8 à 11, ledit système de régulation thermique comportant des collecteurs solaires pour la récupération de la chaleur et des dispositifs par lesquels l'énergie thermique est utilisée d'abord pour le chauffage de l'eau pour usages sanitaires, ensuite pour le chauffage du bâtiment, puis pour diminuer les pertes de transmission vers le sol et, enfin, pour optimiser la puissance de récupération de la chaleur du sol.
